(19) **Europäisches Patentamt**

**European Patent Office**

**Office européen des brevets**

(11) **EP 1 727 049 A2**

(12) **EUROPÄISCHE PATENTANMELDUNG**

| | |
|---|---|
| (43) Veröffentlichungstag:<br>**29.11.2006 Patentblatt 2006/48** | (51) Int Cl.:<br>***G06F 11/00*** *(2006.01)*    *G06F 1/24* *(2006.01)* |
| (21) Anmeldenummer: **06001920.5** | |
| (22) Anmeldetag: **31.01.2006** | |

| | |
|---|---|
| (84) Benannte Vertragsstaaten:<br>**AT BE BG CH CY CZ DE DK EE ES FI FR GB GR HU IE IS IT LI LT LU LV MC NL PL PT RO SE SI SK TR**<br>Benannte Erstreckungsstaaten:<br>**AL BA HR MK YU** | (72) Erfinder:<br>• **Stellmacher, Thorsten**<br>  **59427 Unna (DE)**<br>• **Heinrich, Klaus**<br>  **44227 Dortmund (DE)** |
| (30) Priorität: **28.05.2005 DE 102005024550** | (74) Vertreter: **COHAUSZ DAWIDOWICZ HANNIG & SOZIEN**<br>**Patent- und Rechtsanwaltskanzlei**<br>**Schumannstrasse 97-99**<br>**40237 Düsseldorf (DE)** |
| (71) Anmelder: **WILO AG**<br>**44263 Dortmund (DE)** | |

(54) **Hardwarekonzept einer Reset-Schaltung**

(57) Die Erfindung betrifft eine Schaltungsanordnung zur Überwachung der Funktion eines Mikroprozessors oder eines Mikrocontrollers, wobei der Mikroprozessor oder der Mikrocontroller einen Statusausgang, an welchem ein Statussignal ausgegeben wird, sowie einen Reset-Eingang zum Auslösen eines Neustarts des Mikroprozessors oder Mikrocontrollers aufweist, mit Mitteln zur Durchführung eines automatischen Neustarts, die derart ausgebildet sind, dass ein ResetSignal im Falle eines nichtgetakteten Statussignals erzeugbar ist, wobei besagte Mittel außerhalb des Mikroprozessors oder des Mikrocontrollers angeordnet und eine Transistor-Eingangsstufe, die ein mittelwertfreies Signal erzeugt, mit welchem ein Transistor angesteuert wird, der die Spannung an einem Kondensator innerhalb eines definierbaren Spannungsbereichs hält, eine Kippstufe und eine Verzögerungsstufe zur Festlegung des Zeitpunkts der Auslösung des Programmneustarts aufweisen.

## Fig. 1

EP 1 727 049 A2

**Beschreibung**

Die Erfindung betrifft eine Schaltungsanordnung zur Überwachung der Funktion eines Mikroprozessors oder eines Mikrocontrollers, wobei der Mikroprozessor oder der Mikrocontroller einen Statusausgang, an welchem ein Statussignal ausgegeben wird, sowie einen Reset-Eingang zum Auslösen eines Neustarts des Mikroprozessors oder Mikrocontrollers aufweist, mit Mitteln zur Durchführung eines automatischen Neustarts, die derart ausgebildet sind, dass ein Reset-Signal im Falle eines nichtgetakteten Statussignals erzeugbar ist, wobei besagte Mittel außerhalb des Mikroprozessors oder des Mikrocontrollers angeordnet sind.

Mit Hilfe von Mikrocontrollern oder Mikroprozessoren können elektronisch gespeicherte Programme abgearbeitet und ausgeführt werden. Der Ablauf eines Programms innerhalb eines Mikrocontrollers oder Mikroprozessors kann jedoch fehlerhaft sein, so können beispielsweise elektromagnetische Felder oder Impulse den Programmablauf stören. Bei einem fehlerhaften Programmablauf muss ein Mikrocontroller oder Mikroprozessor durch einen Reset wieder gestartet werden. Zu diesem Zweck weisen Mikrocontroller oder Mikroprozessoren häufig integrierte Bausteine auf, die die Funktionsfähigkeit überwachen und im Falle eines Programmfehlers, diesen detektieren und den Mikrocontroller oder Mikroprozessor neu starten können. Derartige Überwachungseinheiten sind unter dem Begriff "Watchdog" bekannt.

Befindet sich ein Mikrocontroller oder Mikroprozessor in Gegenwart eines starken elektromagnetischen Feldes, beispielsweise innerhalb eines Motorfeldes eines Elektromotors, so kann es vorkommen, dass auch dieser interne Watchdog nur fehlerhaft abläuft und somit nur noch ein Aus- und wieder Einschalten der Versorgungsspannung des Mikrocontrollers oder Mikroprozessors per Hand möglich ist, damit das Programm des Mikrocontrollers oder Mikroprozessors wieder neu gestartet wird.

Zur Behebung dieses Nachteils sind elektronische Schaltungsanordnungen bekannt, die außerhalb des Mikrocontrollers oder Mikroprozessors angeordnet sind, seine Funktionsfähigkeit überwachen, und im Falle eines Programmfehlers einen Reset-Impuls erzeugen, womit der Mikroprozessor oder Mikrocontroller neu gestartet werden kann.

Ein Mikroprozessor oder Mikrocontroller weist im Allgemeinen einen Statusausgang auf, der bei fehlerfreiem Betrieb des Mikrocontrollers oder Mikroprozessors getaktet ist. Das Statussignal wird durch ein Rechtecksignal einer bestimmten Frequenz gebildet, wobei der Statusausgang zwischen zwei Spannungswerten wechselt, die beispielsweise von dem 0V Bezugspotenzial (Low) und der Versorgungsspannung (High) gebildet sind.

Darüber hinaus weisen Mikroprozessoren oder Mikrocontroller einen Reset-Eingang auf, über den ein Auslösen eines Programmneustarts durchführbar ist. Ein Reset wird in der Regel dadurch ausgelöst, dass der Reset-Eingang mit einem niedrigen Potenzial (Low), beispielsweise 0V, beaufschlagt wird. Im Normalbetrieb ist an den Reset-Eingang eine Spannung in Höhe der Versorgungsspannung (High) anzulegen. Dies ist jedoch nicht bei jedem Mikroprozessor- oder -controllermodell notwendig, da diese oft interne "Pull-Up Widerstände" aufweisen, die den Eingang mit der Versorgungsspannung verbinden und auf diese Weise einen nicht beschalteten oder nicht potenzialbeaufschlagten Reset-Eingang stet auf High halten. Ein Neustart des Prozessors oder Controllers wird somit durch ein sogenanntes "Active-Low" ausgelöst. Für einen ungestörten Programmablauf muss folglich die an dem Reset-Eingang anliegende Spannung oberhalb einer bestimmten Grenzspannung liegen, ab der am Reset-Eingang ein High erkannt wird.

Aus der amerikanischen Patentschrift US 5,426,776 ist eine Watchdog-Schaltung bekannt, bei welcher das getaktete Statussignal des Mikroprozessors einer Eingangsstufe zugeführt wird, die in Abhängigkeit des Signalverlaufs des Statussignals den Ladezustand eines ersten Kondensators beeinflusst, wobei die Spannung an dem ersten Kondensator einen ersten Eingang eines Komparators zugeführt wird. Der zweite Eingang des Komparators ist über einen Spannungsteiler mit der Versorgungsspannung des Mikrocontrollers verbunden. Zur Spannungsversorgung des Mikroprozessors und der Watchdog-Schaltung offenbart die Patentschrift eine Schaltungsanordnung, die mit Hilfe einer Einweggleichrichtung aus einer Wechselspannung eine gleichgerichtete Spannung erzeugt, mit der eine Zenerdiode und ein parallel zur Zenerdiode geschalteter zweiter Kondensator zur Glättung beaufschlagt wird, wobei die Spannung am Kondensator die Versorgungsspannung (Vcc) bildet.

Die Eingangsstufe weist eine "Ladungspumpe" auf, mit Hilfe derer die Ladung des ersten Kondensators auf den zweiten Kondensator übertragen werden kann, so dass die Spannung des ersten Kondensators unterhalb einer für den Komparator erforderlichen Schaltschwelle liegt, sofern das Statussignal ein Rechtecksignal darstellt. Ein Programmablauffehler kann sich dergestalt auftreten, dass der Statusausgang auf einem der beiden Potenziale, zwischen denen das Status-Signal im Normalbetrieb hin und her wechselt, hängen bleibt, oder dass sich die Frequenz des Statussignals derart ändert, dass sie gegenüber dem Normalbetrieb höher oder geringer wird. Ändert sich das Statussignal nicht, so wird keine Ladung von dem ersten Kondensator auf den zweiten Kondensator gepumpt, die Spannung an dem ersten Kondensator steigt und überschreitet eine Referenzspannung, die den Komparator einen Zustandswechsel detektieren lässt. Dieser Zustandswechsel kommt dadurch zum Ausdruck, dass der Ausgang des Komparators auf das Bezugspotenzial "Ground" (Gnd) gezogen wird. Dieses Ausgangssignal des Komparators stellt das Active-Low Signal dar, mit dem der Reset-Eingang zur Auslösung eines Neustarts des Mikroprozessors oder - controllers beaufschlagbar ist.

Nachteilig ist bei dieser Watchdog-Schaltung, dass die schaltungstechnische Realisierung der Ladungspumpe der Eingangsstufe derart ausgebildet sein muss, dass der Statusausgang über eine Reihenschaltung eines Widerstandes mit einem Kondensator und einer Diode mit der Versorgungsspannung verbunden ist. Damit der Statusausgang nicht unnötig stark belastet wird, was zur Schädigung des Mikrocontrollers führen kann, müssen die Widerstände besonders hochohmig ausgelegt werden. Dies hat den Nachteil, dass die Eingangsstufe für schnellgetaktete Statusausgänge nicht geeignet ist. Darüber hinaus sieht die technische Ausgestaltung der Watchdog-Schaltung der US 5,426,776 vor, dass das Netzteil zur Erzeugung der Versorgungsspannung einen Kondensator am Ausgang aufweist, zu dem die Ladung des ersten Kondensators über die Ladungspumpe gepumpt werden kann. Dieser Kondensator ist jedoch in der Praxis nicht immer vorhanden. Mobile Geräte, die beispielsweise den Versorgungsbetrieb mit Hilfe einer Batterie vorsehen, bilden keine Grundlage für die Anwendung der Erfindung der US 5, 426,776. Darüber hinaus wird das Netzteil durch das Hin- und Herpumpen von Ladung stark belastet. Die permanente Wirkung des getakteten Statussignals auf den Glättungskondensator des Netzteils wirkt sich insbesondere in einer erhöhten Welligkeit der Ausgangsspannung des Netzteils aus, was wiederum zu Störungen und Fehlern des Mikroprozessors führen kann, der stets eine gut geglättete Gleichspannung als Versorgungsspannung benötigt.

Der Erfindung liegt die Aufgabe zugrunde, ein einfaches Hardwarekonzept einer zuverlässigen und ausfallsicheren Reset-Schaltung mit geringem Herstellungs- und Kostenaufwand bereit zu stellen, die einen Funktionsfehler eines Mikroprozessors oder Mikrocontrollers schnell erkennt und zur individuellen und flexiblen Anpassung der Schaltung an das charakteristische Taktverhalten des Status-Signals nach einer frei wählbaren Zeit einen Reset-Impuls einstellbarer Länge erzeugt, welcher wiederum einen Neustart des Mikroprozessors oder Mikrocontrollers auslöst. Auch soll die Reset-Schaltung die Nachteile des Standes der Technik derart überwinden, dass keine Anforderungen an die Versorgungsspannung gestellt werden, insbesondere auch eine Verwendung der Reset-Schaltung bei batterieversorgten Mikroprozessoren oder Mikrocontrollern möglich ist, und dass bei mit Netzgerät betriebenen Mikrocontrollern oder Mikroprozessoren keine Verschlechterung der Welligkeit zu verzeichnen ist. Darüber hinaus ist es Aufgabe der Erfindung, unter Verwendung einfacher und kostengünstiger Bauelemente eine platzsparende, langlebige und störungsunanfällige Reset-Schaltung bereit zu stellen, die den Statusausgang des Mikroprozessors nicht stark belastet.

Diese Aufgabe wird durch eine Schaltungsanordnung mit den Merkmalen des Anspruchs 1 gelöst. Vorteilhafte Ausgestaltungen der Erfindung sind in den Unteransprüchen genannt.

Tritt bei der Ausführung eines Programms durch einen Mikroprozessor oder Mikrocontroller ein Fehler insbesondere ein Programmstillstand auf, so wirkt sich dies auf das Statussignal am Statusausgang derart aus, dass der Takt ausbleibt und das Statussignal auf dem bei Programmstillstand zuletzt vorgelegenen Spannungswert verharrt. Eine schnelle und zuverlässige Detektion eines derartigen Taktausbleibens ohne Anforderungen an einen die Schaltung und den Mikrocontroller bzw. Mikroprozessor speisenden Netzteil zu stellen sowie ohne Beeinträchtigung der Gleichspannungswelligkeit der sekundärseitigen Netzteilspannung zu verursachen, kann erfindungsgemäß dadurch erreicht werden, dass eine direkte Ankopplung der Schaltungsanordnung an den Statusausgang des Mikroprozessors oder Mikrocontrollers ohne Wechselwirkung mit einem eine Gleichspannung erzeugenden Netzteil erfolgt.

Hierzu wird eine Schaltungsanordnung zur Überwachung der Funktion eines Mikroprozessors oder eines Mikrocontrollers vorgeschlagen, wobei der Mikroprozessor oder Mikrocontroller einen Statusausgang, an welchem ein Statussignal ausgegeben wird, sowie einen Reset-Eingang zum Auslösen eines Neustarts des Mikroprozessors oder Mikrocontrollers aufweist, mit Mitteln zur Durchführung eines automatischen Neustarts, die derart ausgebildet sind, dass ein Reset-Signal im Falle eines nichtgetakteten Statussignals erzeugbar ist, wobei besagte Mittel außerhalb des Mikroprozessors oder Mikrocontrollers angeordnet sind, wobei die Schaltungsanordnung zumindest eine Transistor-Eingangsstufe und eine Kippstufe mit jeweils mindestens einem Ausgang und mindestens einem Eingang umfasst und wobei die Transistor-Eingangsstufe mit dem Statusausgang des Mikroprozessors oder Mikrocontrollers verbunden ist.

Die Transistor-Eingangsstufe ermöglicht eine Statussignalverarbeitung, ohne Wechselwirkung mit einem ausgangsseitig des Versorgungsspannung erzeugenden Netzteils vorhandenen Kondensator, insbesondere ohne ein Hin- und Herpumpen von Kondensatorladungen, so dass die erfindungsgemäße Reset-Schaltung auch bei batteriegespeisten Mikrocontrollern oder Mikroprozessoren verwendbar ist. Ferner wird der Statusausgang durch die Transistor-Eingangsstufe lediglich minimal belastet, womit der Mikrocontroller oder Mikroprozessor geschont und seine Lebensdauer erhöht wird. Des Weiteren dient die Kippstufe dazu, eine schnelle und zuverlässige Signalverarbeitung sicherzustellen.

Mit Hilfe der Transistor-Eingangsstufe kann ein getaktetes Statussignal in ein Ausgangssignal gewandelt werden, welches einem ersten Zustand entspricht, sowie ein nichtgetaktetes Statussignal ein Ausgangssignal gewandelt werden, welches einem zweiten Zustand entspricht, wobei es vorteilhaft ist, einen ersten Eingang der Kippstufe mit dem Ausgangssignal zu beaufschlagen, da auf diese Weise eine einfache und unmittelbare Erfassung eines Zustandswechsels des Ausgangssignals der Transistor-Eingangsstufe möglich ist und infolgedessen an mindestens einem ersten Ausgang der Kippstufe ein Reset-Signal erzeugbar ist.

Die Kippstufe kann beispielsweise als bistabile Kippstufe ausgeführt sein, wobei diese bei Vorliegen eines Zustandswechsels lediglich ein auf einem konstanten Wert verharrendes Reset-Signal am ersten Ausgang aufweist, beispielsweise ein auf dem Wert 0V verharrendes Reset-Signal aufweist, so dass die Notwendigkeit der Umsetzung des Reset-Signals in einen Reset-Impuls besteht. Der Reset-Eingang des Mikroprozessors kann direkt mit dem Reset-Impuls beaufschlagt werden, so dass der bauliche Aufwand der Schaltungsanordnung auf eine minimale Anzahl von elektronischen Bauelementen reduziert werden kann.

Alternativ kann die Kippstufe auch als monostabile Kippstufe ausgebildet werden, wobei hier eine externe RC-Beschaltung notwendig ist, um das Zeitintervall zu definieren, nach dem das Reset-Signal am ersten Ausgang der Kippstufe in Folge eines Zustandswechsels am ersten Eingang wieder in den ursprünglichen Zustand zurückspringt. Die externe RC-Beschaltung kann als eine Verzögerungsstufe betrachtet werden, die auch bei der Verwendung einer bistabilen Kippstufe als Mittel zur Umsetzung des Reset-Signals in einen Reset-Impuls verwendbar ist. Die Verzögerungsstufe erzeugt ein Signal zum Zurücksetzen der Kippstufe, wodurch insbesondere ein erneuter Wechsel des ersten Ausgangs der Kippstufe in seinen ursprünglichen Zustand erfolgen kann. Es ist von Vorteil, das Signal zum Zurücksetzten der Kippstufe aus dem von der Kippstufe erzeugten Reset-Signal selbst zu erzeugen, da in diesem Fall keine weiteren Bauelemente notwendig sind.

Alternativ kann das Signal zum Zurücksetzen der Kippstufe auch aus dem invertierten Reset-Signal oder aus einem aus dem Reset-Signal erzeugtes Signal erzeugt werden. Hierzu kann beispielsweise ein Inverter zwischen dem ersten Ausgang der Kippstufe und dem Eingang der Verzögerungsstufe geschaltet werden oder die interne Verschaltung der Verzögerungsstufe entsprechend angepasst werden.

Für eine einfache und aufwandsarme Taktausfalldetektion ist es von Vorteil, wenn das Ausgangssignal der Eingangsstufe im Falle eines nichtgetakteten Statussignals einen Schwellenwert über- oder unterschreitet, da in diesem Fall die Kippstufe am ersten Eingang einen Zustandswechsel detektieren kann. Dieser Schwellenwert kann beispielsweise dort liegen, wo die Logik der Kippstufe einen Zustandswechsel von "low" (0V) nach "high" (Vcc) oder von "high" (Vcc) nach "low" (0V) detektiert.

Für einen universellen und flexiblen Einsatz der Reset-Schaltung ist es von Vorteil, wenn das Reset-Signal nach einer festlegbaren Verzögerungszeit $V_1$ erzeugt wird und eine festlegbare Dauer $T_1$ aufweist, da damit der Zeitpunkt des Neustarts des Mikroprozessors oder Mikrocontrollers gewählt werden kann. Durch die Verzögerung eines Neustarts kann beispielsweise eine Abkühlzeit des Mikroprozessors oder Mikrocontrollers oder eine Safety-Periode realisiert werden, innerhalb welcher beispielsweise von dem Mikroprozessor oder - controller angesteuerte Komponenten und/ oder Peripheriegeräte in einen Ausgangszustand gebracht werden können, um diese Geräte nicht zu schädigen oder durch sie in Folge eines Programmstillstandes Schaden hervorzurufen.

Für eine einfache Signalumsetzung des getakteten Statussignals, auch "Toggle-Signal" genannt, ist es empfehlenswert, dass die Transistor-Eingangsstufe Mittel zur Erzeugung eines mittelwertfreien Signals und eine dynamische Takteingangsstufe mit Mitteln zur Festlegung der Verzögerungszeit $V_1$ aufweist. Mit Hilfe der Mittel zur Erzeugung eines mittelwertfreien Signals (CMR, Common Mode Noise Rejection) kann eine Gleichtakt-Störunterdrückung realisiert werden.

Eine besonders einfache und preiswerte Realisierung der Mittel zur Erzeugung eines mittelwertfreien Signals kann dadurch erreicht werden, dass sie beispielsweise durch eine Reihenschaltung gebildet werden, die mindestens einen Kondensator und mindestens einen Widerstand aufweist, wobei ein zweiter Widerstand gegen Masse geschaltet ist und wobei die an mindesten einem der Bauelemente abfallende Spannung, vorzugsweise die an dem gegen Masse geschalteten Widerstand abfallende Spannung das Eingangssignal der dynamischen Takteingangsstufe bildet.

Des Weiteren kann in einer vorteilhaften Ausprägung der Transistor-Eingangsstufe die dynamische Takteingangsstufe zumindest einen Transistor aufweisen, der von dem mittelwertfreien Signal angesteuert werden kann. Um den Herstellungsaufwand der erfindungsgemäßen Schaltungsanordnung weiterhin gering zu halten, ist es ferner vorteilhaft, wenn die Mittel zur Festlegung der Verzögerungszeit $V_1$ durch eine Reihenschaltung eines Kondensators und eines Widerstandes gebildet werden, wobei die an zumindest einem der beiden Bauelemente abfallende Spannung, vorzugsweise die an dem Kondensator abfallende Spannung, das Ausgangssignal der Eingangsstufe bildet.

Diese erfindungsgemäße Ausprägung der Schaltungsanordnung hat den Vorteil, dass das Ausgangssignal der Eingangsstufe durch abwechselndes Schalten des Transistors von einem leitenden Zustand in den nichtleitenden Zustand innerhalb eines Spannungsbereichs haltbar ist, in welchem die Kippstufe an dem ersten Eingang keinen Zustandswechsel erfasst. Mit Hilfe des Transistors ist es somit möglich, das Ausgangssignal mit der Eingangsstufe unterhalb oder oberhalb des Schwellenwertes zu halten, bei dem die Logik der Kippstufe einen Zustandswechsel am ersten Eingang detektiert.

Für eine einfache sowie fertigungs- und kostengünstige Ausgestaltung der Verzögerungsstufe eignet sich beispielsweise eine Reihenschaltung aus einem Kondensator und einem Widerstand. Der Eingang der Verzögerungsstufe ist für eine unmittelbare Erzeugung eines Rücksetzsignals für die Kippstufe aus dem Reset-Signal mit einem zweiten Ausgang der Kippstufe verbunden. Des Weiteren kann der Ausgang der Verzögerungsstufe mit einem zweiten Eingang der Kippstufe verbunden werden, wobei die an zumindest einem der beiden Bauelemente der Verzögerungsstufe abfallende Spannung, vorzugsweise die an dem Kondensator abfallende Spannung, das Ausgangssignal der Verzögerungsstufe bildet, mit dem der zweite Eingang der Kippstufe beaufschlagt werden kann.

Hierbei eignet sich als zweiter Eingang der Kippstufe insbesondere der Reset-Eingang, womit eine besonders zuverlässige und schnelle Zurücksetzung der Kippstufe möglich ist. Die direkte Verbindung des zweiten Ausgangs der Kippstufe mit dem Eingang der Verzögerungsstufe hat den Vorteil, dass ein Zustandswechsel des Eingangssignals der Verzögerungsstufe infolge eines Zustandswechsels am zweiten Ausgang der Kippstufe eine derartige Spannungsänderung des Kondensators der Verzögerungsstufe erzeugen kann, so dass ein Zustandswechsel an dem zweiten Eingang von der Logik der Kippstufe durch die Kippstufe erfasst werden kann.

Die Kippstufe kann beispielsweise von einem D-Flipflop gebildet werden, der zumindest einen Clock-Eingang, einen Daten-Eingang, einen Reset-Eingang und zumindest einen invertierten und einen nichtinvertierten Ausgang aufweist, wobei der Clock-Eingang in einer besonders vorteilhaften Ausführungsvariante der erfindungsgemäßen Schaltungsanordnung mit dem Ausgangssignal der Transistor-Eingangsstufe beaufschlagt werden kann, der Daten-Eingang dauerhaft mit einem High-Potenzial beaufschlagt ist, und der Reset-Eingang mit dem Ausgangssignal der Verzögerungsstufe beaufschlagt ist. Als High-Potenzial ist beispielsweise die volle Versorgungsspannung (Vcc) der Schaltungsanordnung möglich.

Alternativ kann die Kippstufe auch durch einen RS-Flipflop gebildet werden, wobei dieser zumindest einen Set-Eingang und einen Reset-Eingang aufweist, sowie zumindest einen invertierten und einen nichtinvertierten Ausgang aufweist. Bei dieser Ausführungsvariante empfiehlt es sich, den Set-Eingang mit dem Ausgangssignal der Transistor-Eingangsstufe und den Reset-Eingang mit dem Ausgangssignal der Verzögerungsstufe zu beaufschlagen. Mit einer derartigen erfindungsgemäßen Verschaltung der Bauelemente ist eine Reduzierung des schaltungstechnischen Aufwands auf ein Minimum erreichbar.

Ferner kann der Aufwand auf eine geringstmögliche Anzahl von Bauelementen reduziert werden. Um dieser Intention weiter Rechnung zu tragen, ist es ebenfalls vorteilhaft, als Reset-Signal das am invertierten Ausgang der Kippstufe anliegende Signal zu verwenden. Dieses Signal kann dem Reset-Eingang des Mikroprozessors oder Mikrocontrollers direkt zugeführt werden. Alternativ kann auch das Signal des nichtinvertierten Ausgangs der Kippstufe dem Reset-Eingang des Mikroprozessors oder Mikrocontrollers zugeführt werden, jedoch ist hierbei in den Signalweg ein Inverter einzufügen, was folglich die Notwendigkeit eines weiteren Bauelementes notwendig macht. Wird als Reset-Signal das am invertierten Ausgang der Kippstufe anliegende Signal verwendet, so kann das am nichtinvertierten Ausgang der Kippstufe anliegende Signal als Eingangssignal der Verzögerungsstufe verwendet werden. Somit sind auch zur Erzeugung eines Reset-Impulses keine weiteren Bauelemente notwendig.

Im Folgenden wird eine bevorzugte Ausführungsvariante der erfindungsgemäßen Schaltungsanordnung sowie ihre Funktionsweise beschrieben. Voraussetzung für die Anwendung der Schaltungsanordnung ist das Vorhandensein eines Statusausgangs, an dem bei fehlerfreiem Betrieb des zu überwachenden Mikroprozessors oder Mikrocontrollers ein getaktetes Status-Signal insbesondere ein Toggle-Signal anliegt. Damit kein Reset des Mikroprozessors oder Mikrocontrollers ausgelöst wird, muss der Statusausgang von dem Mikrocontroller oder Mikroprozessor innerhalb einer bestimmten Zeit getoggelt werden. Unter einem Toggeln wird im Folgenden ein periodischer Zustandswechsel des Statussignals zwischen zwei Potenzialen, insbesondere zwischen einem "High" und einem "Low" verstanden. Hierbei kann "Low" beispielsweise durch das Potenzial 0V (Gnd) und "High" durch das Potenzial, das durch die Versorgungsspannung Vcc gebildet wird, beispielsweise 5 V, gebildet werden.

Durch dieses Toggeln wird ein Transistor angesteuert, welcher im leitenden Zustand einen Kondensator entlädt, wobei sich der Kondensator im nicht leitenden Zustand des Transistors wieder auflädt und wobei durch das periodische Schalten des Transistors die Spannung an dem Kondensator unterhalb einer Schwellenspannung gehalten werden kann, bei der die Kippstufe einen Zustandswechsel am ersten Eingang detektiert. Unterbleibt das Toggeln, so lädt sich der Kondensator über einen Widerstand auf, bis bei einer gewissen Schwellenspannung die Kippstufe kippt und ein Reset-Impuls ausgelöst wird.

Weitere Merkmale und Vorteile der Erfindung ergeben sich aus der nachfolgenden detaillierten Beschreibung und den in den Fig. 1 bis 5 dargestellten Ausführungsvarianten.

Es zeigen

Fig. 1:              Blockschaltbild einer erfindungsgemäßen Reset-Schaltung,

Fig. 2:              Schaltungstechnische Ausführungsvariante der Reset-Schaltung,

Fig. 3a bis 3i:    Darstellung wesentlicher Signalverläufe der Signale der Transistor-Eingangsstufe, der Verzögerungsstufe und der Kippstufe in Signal-Zeitdiagrammen

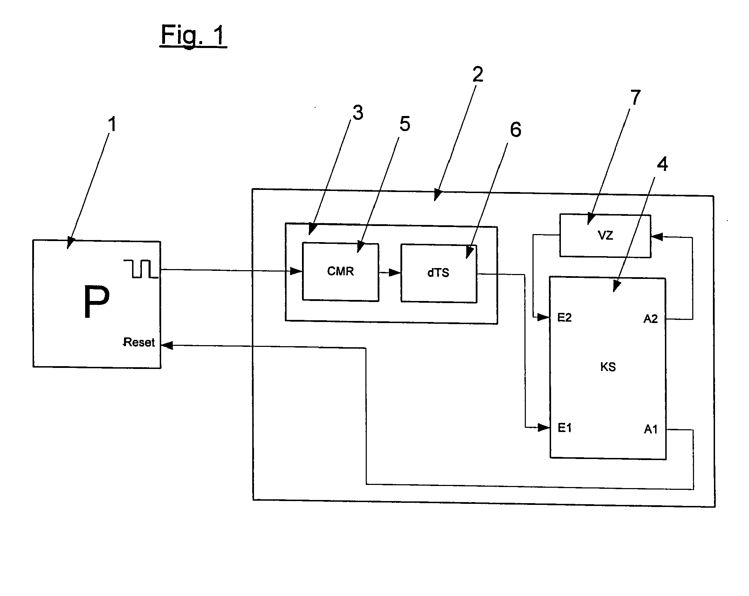

Fig. 1 zeigt eine schematische Darstellung der erfindungsgemäßen Schaltungsanordnung 2 als Blockschaltbild. Der zu überwachende Mikroprozessor 1 weist hierbei einen Statusausgang auf, der bei fehlerfreier Funktionsfähigkeit getaktet ist. Ferner weist er einen Reset-Eingang auf, mit dem ein Neustart des Prozessors 1 möglich ist. In einer bevorzugten Ausführungsvariante umfasst die erfindungsgemäße Schaltungsanordnung 2 eine Transistor-Eingangsstufe 3, eine Kippstufe 4 sowie eine Verzögerungsstufe 7 auf.

Das Statussignal des Mikroprozessors 1 wird dem Eingang der Transistor-Eingangsstufe 3 zugeführt. Der Ausgang der Transistor-Eingangsstufe 3 ist mit dem ersten Eingang $E_1$ der Kippstufe 4 verbunden. Der erste Ausgang

$A_1$ der Kippstufe 4, an dem das Reset-Signal gebildet wird, ist auf den Reset-Eingang des Mikroprozessors 1 zurückgeführt. Zur Bildung eines Reset-Impulses aus dem Reset-Signal am Ausgang $A_1$ der Kippstufe 4 ist der Ausgang $A_2$ der Kippstufe 4 mit dem Eingang der Verzögerungsstufe 7 verbunden, sowie der Ausgang der Verzögerungsstufe 7 mit dem Eingang $E_2$ der Kippstufe 4 verbunden.

In einer ersten bevorzugten Ausführungsvariante wird die Kippstufe 4 durch ein D-Flipflop gebildet. Bei dieser Variante stellt der Eingang $E_1$ der Kippstufe 4 den Clock-Eingang des D-Flipflops dar. Als Ausgang $A_1$ der Kippstufe 4 wird vorteilhafterweise der invertierte Ausgang des D-Flipflops verwendet, und als Ausgang $A_2$ entsprechend der nicht invertierte Ausgang $Q$ des D-Flipflops. Des Weiteren ist in dieser Ausführungsvariante der Eingang $E_2$ durch den Reset-Eingang des D-Flipflops gebildet.

Die Transistor-Eingangsstufe 3 umfasst in dieser Ausführungsvariante eine Gleichtakt-Störunterdrückung 5 (CMR), welcher das Statussignal des Mikroprozessors 1 direkt zugeführt wird, und eine dynamische Takteingangsstufe 6, welcher das Ausgangssignal der Gleichtakt-Störunterdrückung 5 zugeführt wird. Das Ausgangssignal der dynamischen Takteingangsstufe 6 wiederum wird dem Eingang $E_1$ der Kippstufe 4 zugeführt. Durch diese erfindungsgemäße Ausführungsvariante einer Reset-Schaltung 2 wird ein strukturell einfaches Hardwarekonzept realisiert, welches mit minimalem Aufwand und einer geringstmöglichen Anzahl von Bauelementen aufgebaut werden kann.

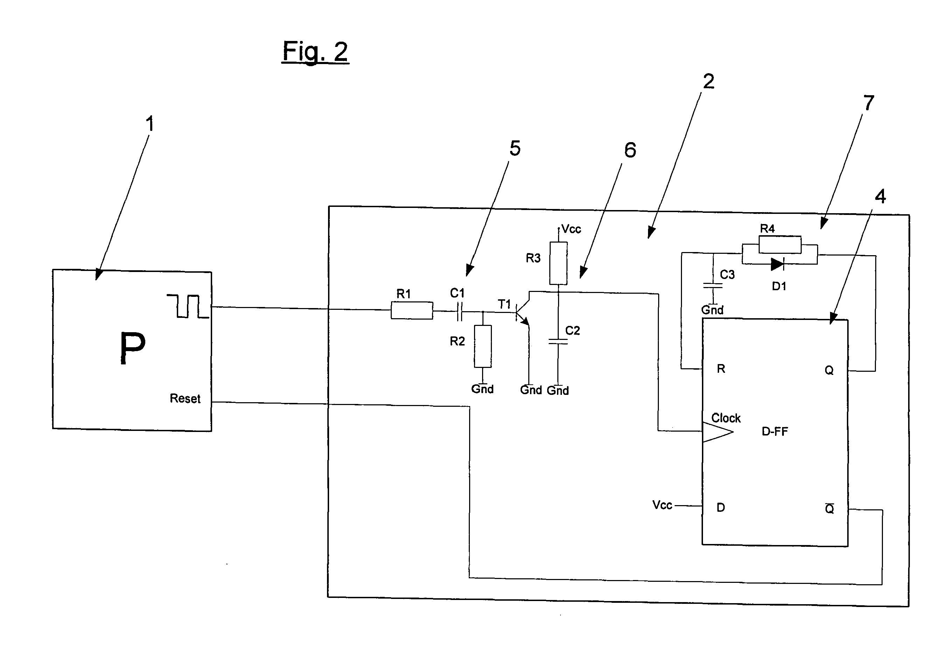

Fig. 2 zeigt eine schaltungstechnische Ausführungsvariante der Transistor-Eingangsstufe 3, der Verzögerungsstufe 7 sowie eine erfindungsgemäße Beschaltung der Kippstufe 4 bei der Verwendung eines D-Flipflops.

Die Gleichtakt-Störunterdrückung 5 wird hierbei aus einer Reihenschaltung eines Widerstandes $R_2$ und eines Kondensator $C_1$ gebildet, wobei diese Reihenschaltung mit dem Statussignal des Mikroprozessors 1 beaufschlagt wird und am Ausgang der Gleichtakt-Störunterdrückung 5 ein Widerstand $R_2$ gegen Masse (Gnd) geschaltet ist. Die dynamische Takteingangsstufe 6 umfasst in dieser speziellen Ausführungsvariante einen Transistor $T_1$ sowie eine Reihenschaltung eines Widerstandes $R_3$ und eines Kondensators $C_2$, wobei der Widerstand $R_3$ mit der Versorgungsspannung Vcc verbunden und der Kondensator $C_2$ gegen Masse (Gnd) geschaltet ist. Der Transistor $T_1$ ist hier als npn-Bipolartransistor ausgebildet, wobei seine Basis mit der an dem Widerstand $R_2$ der Gleichtakt-Störunterdrückung 5 abfallenden Spannung beaufschlagt wird, und der Emitter gegen Masse (Gnd) geschaltet ist. Der Kollektor des Transistors $T_1$ ist mit dem Potenzial des Knotens zwischen dem Widerstand $R_3$ und dem Kondensator $C_2$ verbunden, so dass die an dem Kondensator $C_2$ abfallende Spannung das Ausgangssignal der Transistor-Eingangsstufe 3 bildet, mit der der Clock-Eingang des nachgeschalteten D-Flipflops beaufschlagbar ist.

Zur Erzeugung eines Reset-Impulses ist der Dateneingang D des D-Flipflops mit der Versorgungsspannung $V_{cc}$ verbunden, der nichtinvertierte Ausgang $Q$ des D-Flipflops auf den Eingang der Verzögerungsstufe 7 geführt und der Ausgang der Verzögerungsstufe 7 auf den Reset-Eingang R des D-Flipflops zurückgeführt.

Die Verzögerungsstufe 7 ist in dieser Ausführungsvariante durch eine Reihenschaltung eines Widerstandes $R_4$ und eines Kondensators $C_3$, welcher gegen Masse geschaltet ist, realisiert, wobei die an dem Kondensator $C_3$ abfallende Spannung das Ausgangssignal der Verzögerungsstufe 7 darstellt. Zur schnellen Entladung des Kondensators $C_3$ ist parallel zu dem Widerstand $R_4$ eine Diode $D_1$ geschaltet, deren Kathodenanschluss mit dem Eingang der Verzögerungsstufe 7 verbunden ist.

Der invertierte Ausgang $\overline{Q}$ des D-Flipflops ist auf den Reset-Eingang des Mikroprozessors gelegt.

Im Folgenden wird die Funktionsweise der erfindungsgemäßen Schaltungsanordnung 2 erläutert:

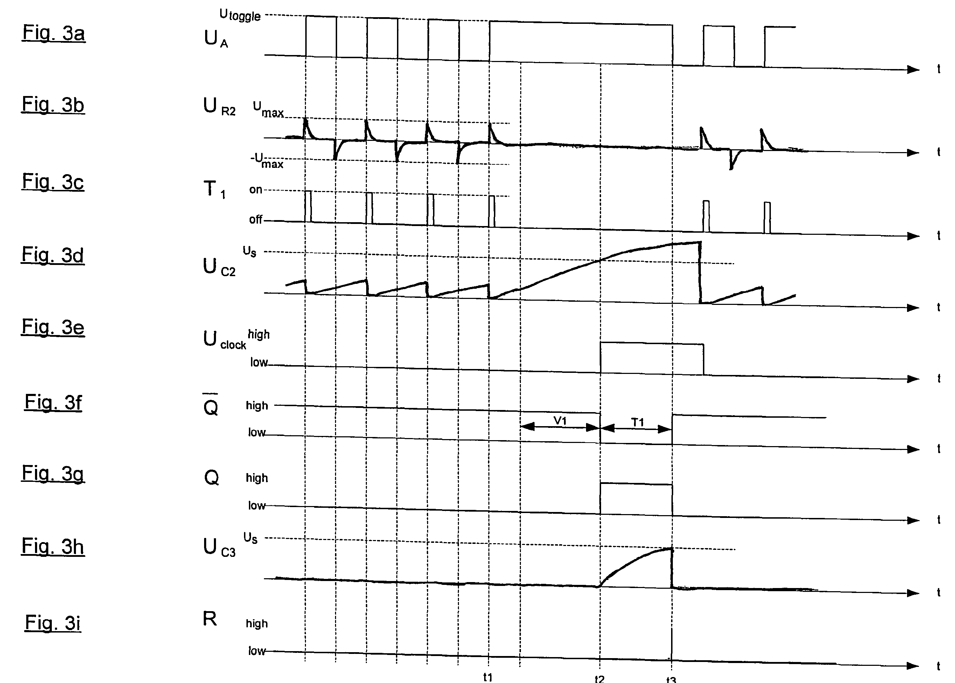

In Fig. 3 sind Signal-Zeitverläufe der wesentlichen Größen der Schaltungsanordnung 2 dargestellt. Das am Statusausgang des Mikroprozessors 1 anliegende Toggle-Signal $U_A$ ist in dem ersten Signalzeitdiagramm Fig. 3a veranschaulicht. Es stellt ein Rechtecksignal bestimmter Frequenz dar, welches zwischen den beiden Spannungswerten 0V und $U_{toggle}$ wechselt. Mit Hilfe der Gleichtakt-Störunterdrückung 5 wird nun dieses Toggle-Signal $U_A$ in ein mittelwertfreies Signal $U_{R2}$ umgewandelt, welches in Fig. 3b dargestellt ist. Die Beaufschlagung der Gleichtakt-Störunterdrückung 5 hat Folgendes zur Folge:

Der Kondensator $C_1$ ist zunächst ungeladen, so dass beim Wechsel des Signals $U_A$ auf den Wert $U_{toggle}$ die Spannung $U_{toggle}$ an den beiden Widerständen $R_1$ und $R_2$ anliegt. Der Kondensator $C_1$ lädt sich mit der Zeitkonstanten $\tau_1 = (R_1 + R_2) C_1$ auf. Dies hat zur Folge, dass der Strom, der zum Laden von $C_1$ benötigt wird, exponentiell sinkt, so dass auch die an $R_2$ abfallende Spannung $U_{R2}$ exponentiell fällt, siehe Fig. 3b). Bei einem Wechsel von $U_A$ von 0V auf $U_{toggle}$ liegt an dem Widerstand $R_2$ folglich eine maximale Spannung $U_{max}$ an, die sich aus einem Spannungsteilerverhältnis von $R_2$ zu $R_1$ ergibt:

$$U_{\max} = \frac{R_2}{R_1 + R_2} U_{toggle}$$

Die an dem Widerstand $R_2$ abfallende Spannung stellt in diesem Ausführungsbeispiel die Basis-Emitterspannung des Transistors $T_1$ dar. Liegt die Basis-Emitterspannung oberhalb eines für den Transistor $T_1$ charakteristischen Wertes, so steuert dieser Transistor $T_1$ auf und die Kollektor-Emitterspannung reduziert sich bei idealisierter Betrachtung auf den Wert 0V. Das an dem Widerstand $R_2$ anliegende mittelwertfreie Spannungssignal $U_{R2}$ liegt nur bei Auftreten einer positiven Spannungsflanke des Signals $U_A$ kurzzeitig oberhalb des charakteristischen Basis-Emitterspannungswertes des Transistors $T_1$, so dass der Transistor $T_1$ nur kurzzeitig zu Beginn eines Spannungswechsels des Toggle-Signals von 0 V auf $U_{toggle}$ durchschaltet. Das Schaltverhalten des Transistors ist in dem Signal-Zeitdiagramm in Figur 3c dargestellt.

Ist der Transistor $T_1$ auf Durchlass geschaltet, so beträgt die Spannung an dem Kondensator $C_2$ annähernd 0 V. Sperrt der Transistor, so lädt sich der Kondensator $C_2$ über den Widerstand $R_3$ mit der Zeitkonstanten $\tau_2 = R_3 C_1$ bis auf den Wert der Versorgungsspannung $V_{cc}$ auf. Wird die Zeitkonstante $\tau_2$ groß genug gewählt, so bleibt die Spannung an dem Kondensator $U_{C2}$ bei getaktetem Statussignal $U_A$ stets unterhalb einer bestimmten Schwellspannung $U_s$.

Sperrt der Transistor $T_1$, kann sich der Kondensator $C_2$ aufladen, wobei er jedoch beim Auftreten einer positiven Spannungsflanke in dem Toggle-Signal $U_A$ in Folge des Übergangs des Transistors $T_1$ in den leitenden Zustand wieder schlagartig entladen wird. Der entsprechende Signalverlauf der Kondensatorspannung $U_{C2}$ des Kondensators $C_2$ ist im Signalzeitdiagramm der Figur 3d dargestellt.

Bleibt nun ein Wechsel des Toggle-Signals $U_A$ beispielsweise in Folge eines Programmstillstands des Mikroprozessors 1 aus, so bleibt ein Übergang des Transistors $T_1$ in den leitenden Zustand aus und die Spannung am Kondensator $C_2$ steigt exponentiell an, siehe Figur 3d für $t > t_1$. Überschreitet die Kondensatorspannung $U_{C2}$ die Schwellenspannung $U_s$, so detektiert der D-Flipflop an seinem Clock-Eingang $U_{clock}$, an dem das Ausgangssignal der Transistor-Eingangsstufe anliegt, einen Zustandswechsel von Low auf High, siehe Figur 3e zum Zeitpunkt $t_2$. Es sei darauf hingewiesen, dass hier beispielhaft ein positiv flankengetriggerter D-Flipflop verwendet wird.

Da der Dateneingang des D-Flipflops auf dem Potenzial der Versorgungsspannung $V_{cc}$ liegt, was einem logischen High-Zustand entspricht, wird dieser High-Zustand auf den nichtinvertierten Ausgang Q in Folge des Auftretens einer positiven Flanke an dem Clock-Eingang übertragen, wobei gleichzeitig der logische Zustand am invertierten Ausgang $\overline{Q}$ vom logischen Zustand High zum logischen Zustand Low wechselt. Die zugehörigen Signalzeitverläufe sind in den Figuren 3f und 3g dargestellt.

Durch den Wechsel des Zustands am nichtinvertierten Ausgang Q des D-Flipflops lädt sich nun der Kondensator $C_3$ der Verzögerungsstufe 7 mit der Zeitkonstanten $\tau_3 = R_4 C_3$ exponentiell auf. Die Spannung $U_{C3}$ am Kondensator $C_3$ stellt das Ausgangssignal der Verzögerungsstufe 7 dar und ist auf den Reset-Eingang des D-Flipflops zurückgeführt. Übersteigt nun die Spannung des Kondensators $C_3$ die Schwellenspannung $U_s$, siehe Figur 3h, so detektiert die Logik des D-Flipflops am Reset-Eingang R einen Zustandswechsel von Low nach High, siehe Figur 3i.

Das Auftreten einer positiven Spannungsflanke am Reset-Eingang R hat nun zur Folge, dass die Ausgänge $\overline{Q}$ und Q des D-Flipflops 4 wieder auf ihren ursprünglichen Wert zurückspringen. Somit wechselt der invertierte Ausgang $\overline{Q}$ beim Auftreten einer positiven Spannungsflanke unmittelbar auf den High-Zustand zurück, womit das am invertierten Ausgang für den Mikroprozessor 1 erzeugte Reset-Signal zu einem Reset-Impuls abgeschlossen wird und infolgedessen ein Neustart des Mikroprozessors 1 erfolgt. Gleichzeitig wechselt der Zustand am nichtinvertierten Ausgang Q von High auf Low und der Kondensator $C_3$ der Verzögerungsstufe entlädt sich über die Diode $D_1$ schlagartig, siege Figuren 3f bis 3i) zum Zeitpunkt $t_3$.

Durch den Neustart des Mikroprozessors 1 beginnt das Statussignal $U_A$ wieder an zu toggeln. Beim Auftreten einer positiven Spannungsflanke schaltet der Transistor $T_1$ wieder durch und entlädt somit den Kondensator $C_2$, so dass der Zustand am Clock-Eingang des D-Flipflops 4 von High auf Low zurückwechselt, siehe Signalzeitdiagramm in Figur 3d.

Diese besonders vorteilhafte Ausführungsvariante der erfindungsgemäßen Schaltungsanordnung 2 bietet eine sehr zuverlässige und störungsunanfällige Taktausfalldetektion am Statusausgang des Mikroprozessors 1. Auch eine Frequenzreduzierung des Statussignals $U_A$ in Folge eines Mikroprozessorfehlers ist mit der erfindungsgemäßen Schaltungsanordnung 2 möglich. Mit Hilfe geeigneter Wahl der Werte der Bauelemente $R_3$ und $C_2$ der Transistor-Eingangsstufe 3 kann die Reset-Schaltung 2 an jedes beliebige für einen Mikroprozessor bzw. Mikrocontroller charakteristisch getaktete Status-Signal angepasst werden.

Es sei darauf hingewiesen, dass anstelle des positiv flankengetriggerten D-Flipflops 4 auch ein negativ flankengetriggerter D-Flipflop 4 verwendet werden kann. Dies erfordert jedoch die Umkehrung der Aktivierungslogik des D-Flipflops 4. Beispielsweise kann hierzu hinter die Transistor-Eingangsstufe 3 ein Inverter gesetzt werden oder in einer vorteilhaften, nicht dargestellten Ausführungsvariante die dynamische Takteingangsstufe 6 derart geändert werden, dass die Ausgangsspannung der Transistor-Eingangsstufe 3 bzw. der dynamischen Takteingangsstufe 6 bei fehlerfreiem Betrieb des zu überwachenden Mikroprozessors 1 stets oberhalb der Schwellenspannung $U_S$ verbleibt. Hierzu kann anstelle des in Fig. 2 verwendeten npn-Transistors $T_1$ auch ein geeignet verschalteter pnp-Transistor verwendet werden, welcher die Spannung $U_{C2}$ an dem Kondensator $C_2$ oberhalb von $U_S$ hält. Alternativ kann in einer weiteren nicht dargestellten Ausführungsvariante als Ausgangssignal der Transistor-Eingangsstufe 3 auch die an dem Widerstand $R_3$ abfallende Spannung verwendet werden.

Als weitere, nicht dargestellte Ausführungsvariante kann anstelle des D-Flipflops als Kippstufe 4 auch ein RS-Flipflop verwendet werden. In diesem Fall ist eine entsprechende Anpassung der Schaltung nötig. Beispielsweise kann in diesem Fall das Ausgangssignal der Transistor-Eingangsstufe 3 auf den Set-Eingang des RS-Flipflops gelegt werden. Auch eine Realisierung der Kippstufe 4 als monostabile Kippstufe (Monoflop) ist im Rahmen der erfindungswesentlichen Lehre möglich. In diesem Fall ist eine RC-Kombination als externe Beschaltung des Monoflops zur Definition der Impulsbreite des Ausgangsimpulses des Monoflops notwendig. Diese externe RC-Beschaltung tritt in diesem Ausführungsbeispiel an die Stelle der Verzögerungsstufe 7.

Die Verzögerungsstufe 7 kann in einer nicht dargestellten Ausführungsvariante auch ohne Diode D1 betrieben werden. Dies hat den Vorteil, dass ein weiteres Bauelement eingespart werden kann und somit Herstellungsaufwand und -kosten bei der erfindungsgemäßen Reset-Schaltung reduziert werden können. Ferner ist es auch möglich, die Verzögerungsstufe 7 als Monoflop auszuführen, der nach einer einstellbaren Zeit am Reset-Eingang der bistabilen Kippstufe eine positive Flanke erzeugt.

**Patentansprüche**

1.  Schaltungsanordnung zur Überwachung der Funktion eines Mikroprozessors oder eines Mikrocontrollers, wobei der Mikroprozessor oder der Mikrocontroller einen Status-Ausgang, an welchem ein Statussignal ausgegeben wird, sowie einen Reset-Eingang zum Auslösen eines Neustarts des Mikroprozessors oder Mikrocontrollers aufweist, mit Mitteln zur Durchführung eines automatischen Neustarts, die derart ausgebildet sind, dass ein Reset-Signal im Falle eines nichtgetakteten Statussignals erzeugbar ist, wobei besagte Mittel außerhalb des Mikroprozessors oder des Mikrocontrollers angeordnet sind,
    **dadurch gekennzeichnet,**

    - **dass** sie zumindest eine Transistor-Eingangsstufe (3) und eine Kippstufe (4) mit jeweils mindestens einem Ausgang und mindestens einem Eingang umfasst, wobei die Transistor-Eingangsstufe (3) mit dem Status-Ausgang des Mikroprozessors (1) oder des Mikrocontrollers (1) verbunden ist,
    - **dass** die Transistor-Eingangsstufe (3) ein getaktetes Statussignal in ein Ausgangssignal wandelt, welches einem ersten Zustand entspricht, und dass sie ein nichtgetaktetes Statussignal in ein Ausgangssignal wandelt, welches einem zweiten Zustand entspricht, wobei ein erster Eingang ($E_1$) der Kippstufe (4) unmittelbar mit dem Ausgangssignal beaufschlagt wird,
    - **dass** in Folge der Erfassung eines Zustandswechsels an dem ersten Eingang ($E_1$) der Kippstufe (4) an mindestens einem ersten Ausgang ($A_1$) der Kippstufe ein Reset-Signal erzeugbar ist.

2.  Schaltungsanordnung nach Anspruch 1,
    **dadurch gekennzeichnet, dass** sie Mittel zur Umsetzung des Reset-Signals in einen Reset-Impuls aufweist, wobei der Reset-Eingang des Mikroprozessors (1) mit dem Reset-Impuls beaufschlagt wird.

3.  Schaltungsanordnung nach Anspruch 2,
    **dadurch gekennzeichnet, dass** die Mittel zur Umsetzung des Reset-Signals in einen Reset-Impuls durch eine Verzögerungsstufe (7) gebildet sind, mit der ein Signal zum Zurücksetzen der Kippstufe (4) aus dem Reset-Signal oder aus dem invertierten Reset-Signal oder aus einem aus dem Reset-Signal erzeugten Signal erzeugbar ist.

4.  Schaltungsanordnung nach einem der vorherigen Ansprüche,
    **dadurch gekennzeichnet, dass** das Ausgangssignal der Transistor-Eingangsstufe (3) im Falle eines nichtgetakteten Statussignals einen Schwellenwert (Us) über- oder unterschreitet, bei dem die Kippstufe (4) am ersten Eingang ($E_1$) einen Zustandswechsel detektiert.

5.  Schaltungsanordnung nach einem der Ansprüche 2 bis 4,

**dadurch gekennzeichnet, dass** der Reset-Impuls eine festlegbare Dauer ($T_1$) aufweist und nach einer festlegbaren Verzögerungszeit ($V_1$) erzeugbar ist.

6. Schaltungsanordnung nach einem der vorherigen Ansprüche,
**dadurch gekennzeichnet, dass** die Transistor-Eingangsstufe (3) Mittel zur Erzeugung eines mittelwertfreien Signals (5) und eine dynamische Takteingangsstufe (6) mit Mitteln zur Festlegung der Verzögerungszeit ($V_1$) aufweist.

7. Schaltungsanordnung nach Anspruch 6,
**dadurch gekennzeichnet, dass** die Mittel zur Erzeugung eines mittelwertfreien Signals (5) mindestens einen Kondensator (C1) aufweisen.

8. Schaltungsanordnung nach Anspruch 6,
**dadurch gekennzeichnet, dass** die Mittel zur Erzeugung eines mittelwertfreien Signals (5) durch eine Reihenschaltung gebildet sind, die mindestens einen Kondensator (C1) und mindestens einen Widerstand (R2) aufweist, wobei die an zumindest einem der beiden Bauelemente (C1, R2) abfallende Spannung, vorzugsweise die an dem Widerstand (R2) abfallende Spannung, das Eingangssignal der dynamischen Takteingangsstufe (6) bildet.

9. Schaltungsanordnung nach einem der vorherigen Ansprüche,
**dadurch gekennzeichnet, dass** die dynamische Takteingangsstufe (6) zumindest einen Transistor (T1) aufweist, und dass die Mittel zur Festlegung der Verzögerungszeit ($V_1$) durch eine Reihenschaltung eines Kondensators (C2) und eines Widerstandes (R3), gebildet sind, wobei die an zumindest einem der beiden Bauelemente (C2, R3) abfallende Spannung, vorzugsweise die an dem Widerstand (R3) abfallende Spannung, das Ausgangssignal der Transistor-Eingangsstufe (3) bildet und der Transistor (T1) mit dem mittelwertfreien Signal beaufschlagt wird.

10. Schaltungsanordnung nach Anspruch 9,
**dadurch gekennzeichnet, dass** das Ausgangssignal der Transistor-Eingangsstufe (3) durch abwechselndes Schalten des Transistors (T1) von einem leitenden Zustand in den nichtleitenden Zustand innerhalb eines Spannungsbereichs haltbar ist, in welchem die Kippstufe (4) an dem ersten Eingang ($E_1$) keinen Zustandswechsel erfasst.

11. Schaltungsanordnung nach einem der vorherigen Ansprüche,
**dadurch gekennzeichnet, dass** die Verzögerungsstufe (7) zumindest eine Reihenschaltung aus einem Kondensator (C3) und einem Widerstand (R4), einen Eingang, der mit einem zweiten Ausgang ($A_2$) der Kippstufe (4) verbunden ist, und einen Ausgang aufweist, der mit einem zweiten Eingang (E2) der Kippstufe (4), insbesondere mit dem Reset-Eingang, verbunden ist, wobei die an zumindest einem der beiden Bauelemente (C3, R4) abfallende Spannung, vorzugsweise die an dem Kondensator (C3) abfallende Spannung, das Ausgangssignal der Verzögerungsstufe (7) bildet.

12. Schaltungsanordnung nach Anspruch 11,
**dadurch gekennzeichnet, dass** durch einer Zustandswechsel des Eingangssignals der Verzögerungsstufe (7) eine derartige Spannungsänderung des Kondensators (C3) erzeugbar ist, dass ein Zustandswechsel an dem zweiten Eingang ($E_2$) der Kippstufe (4) durch die Kippstufe (4) erfassbar ist.

13. Schaltungsanordnung nach einem der vorherigen Ansprüche,
**dadurch gekennzeichnet, dass** die Kippstufe (4) von einem D-Flipflop mit zumindest einem Clock-Eingang, einem Daten-Eingang, einem Reset-Eingang und zumindest einem invertierten und einem nichtinvertierten Ausgang gebildet ist, wobei der Clock-Eingang mit dem Ausgangssignal der Transistor-Eingangsstufe (3) beaufschlagt ist, der Daten-Eingang dauerhaft mit einem High-Potenzial beaufschlagt ist und der Reset-Eingang mit dem Ausgangssignal der Verzögerungsstufe (7) beaufschlagt ist.

14. Schaltungsanordnung nach einem der vorherigen Ansprüche 1 bis 12,
**dadurch gekennzeichnet, dass** die Kippstufe (2) von einem RS-Flipflop mit zumindest einem Set-Eingang und einem Reset-Eingang und zumindest einem invertierten und einem nichtinvertierten Ausgang ($A_2$) gebildet ist, wobei der Set-Eingang mit dem Ausgangssignal der Transistor-Eingangsstufe (3) beaufschlagt ist und der Reset-Eingang mit dem Ausgangssignal der Verzögerungsstufe (7) beaufschlagt ist.

15. Schaltungsanordnung nach einem der Ansprüche 13 oder 14,
**dadurch gekennzeichnet, dass** das Reset-Signal durch das am invertierten Ausgang der Kippstufe (4) anliegenden Signal gebildet ist, und das Eingangssignal der Verzögerungsstufe (7) durch das am nichtinvertierten Ausgang der Kippstufe (4) anliegende Signal gebildet ist.

16. Schaltungsanordnung nach einem der vorherigen Ansprüche,
**dadurch gekennzeichnet, dass** das Signal an einem Ausgang (A2) der Kippstufe (4) über eine Verzögerungsstufe (7) zu einem Eingang (E2) der Kippstufe (4) zurückgekoppelt ist.

17. Schaltungsanordnung nach Anspruch 16,
**dadurch gekennzeichnet, dass** das Signal an dem nichtinvertierten Ausgang (A2) der Kippstufe (4) über die Verzögerungsstufe (7) zu dem Reset-Eingang (E2) der Kippstufe (4) zurückgekoppelt ist.

Fig. 1

EP 1 727 049 A2

Fig. 2

EP 1 727 049 A2

Fig. 3a  $U_A$  $U_{toggle}$

Fig. 3b  $U_{R2}$  $U_{max}$  $-U_{max}$

Fig. 3c  $T_1$  on  off

Fig. 3d  $U_{C2}$  $U_S$

Fig. 3e  $U_{clock}$  high  low

Fig. 3f  $\overline{Q}$  high  low  V1  T1

Fig. 3g  $Q$  high  low

Fig. 3h  $U_{C3}$  $U_S$

Fig. 3i  $R$  high  low

t1  t2  t3

t

EP 1 727 049 A2

13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5426776 A